# EUROPEAN PATENT APPLICATION

(11) **EP 4 105 260 A1**
(43) Date of publication of application: **21.12.2022**
(21) Application number: 22179459.7
(22) Date of filing: 16.06.2022
(51) Int. Cl.: C08G 65/44

(54) **POLYFUNCTIONAL POLY(ARYLENE ETHER) RESIN AND PREPARATION METHOD THEREOF**

(30) Priority: 18.06.2021 CN 202110681119
(71) Applicant: Jinan Shengquan Group Share Holding Co., Ltd, Jinan City, Shandong Province (CN)
(72) Inventor: Tang, Lei, Jinan City (CN); Diao, Zhaoyin, Jinan City (CN); Li, Zhifang, Jinan City (CN); Li, Xiucheng, Jinan City (CN); Li, Yang, Jinan City (CN)
(74) Representative: Jannig & Repkow Patentanwälte PartG mbB

(57) **Abstract**

The present application discloses a polyfunctional poly(arylene ether) resin, having a number average molecular weight of 1000-6000, preferably a number average molecular weight of 1500-3000, and a structural formula shown in Formula (1) below: in Formula (1), R1, R2, R3 and R4 are each independently selected from hydrogen, halogen, aryl or C₁-C₁₂ alkyl; R5 and R6 are each independently selected from hydrogen, methyl or ethyl; and m and n are each independently selected from integers of 1 to 50. The present application further discloses a preparation method of the polyfunctional poly(arylene ether) resin, including the following steps: adding a monophenol compound and a polyphenol compound to a good solvent of poly(arylene ether) to obtain a monomer solution, mixing the monomer solution with a catalyst while introducing oxygen to carry out polymerization, and after the polymerization is finished, adding a terminator to obtain a reaction liquid I; and carrying out liquid-liquid separation on the reaction liquid I, taking an upper organic phase as a reaction liquid II, and pouring the reaction liquid II into a poor solvent to precipitate the polyfunctional poly(arylene ether) resin as shown in Formula (1).

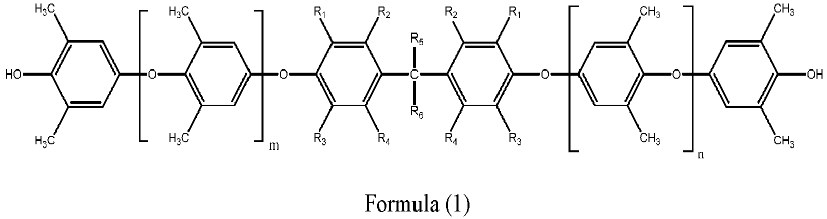

## Description

### Technical Field

The present application relates to the field of polymer synthesis, and in particular to a polyfunctional poly(arylene ether) resin and a preparation method thereof.

### Background Art

In recent years, with the continuous development of information industry, the requirements for signal transmission speed and transmission loss are getting higher and higher. Epoxy resin is the most widely used matrix resin in the traditional copper-clad plate manufacturing industry. Due to its poor dimensional stability at high temperature and high dielectric constant in the high-frequency range, the traditional epoxy resin has been unable to meet the needs of the technological development of electronic industry products. Therefore, the development of copper-clad plates with low dielectric constant and dielectric loss has become one of the research hotspots of major copper-clad plate manufacturers.

Thermoplastic poly(arylene ether) (PPE) has excellent Dk and Df properties. The thermoplastic poly(arylene ether) also has low hygroscopicity and good flame retardancy, and thus, is a potential base material for copper-clad plates. The polymer poly(arylene ether) is a thermoplastic engineering plastic with excellent heat resistance, and has good mechanical properties and dimensional stability. However, the polymer poly(arylene ether) requires high processing temperature and has very high viscosity during processing, and thus cannot be directly applied to the field of copper-clad plates.

In order to solve these problems, a typical method is to reduce the molecular weight of poly(arylene ether) and link reactive groups to both ends of the poly(arylene ether), which makes the poly(arylene ether) become a thermosetting resin that can cross-link with other resins, so that the poly(arylene ether) can exert its excellent Dk and Df properties.

Patent Document 1 discloses an epoxy-functionalized poly(arylene ether) resin. This resin can also only react with acid anhydrides, acids and cyanates, but cannot fully exert excellent dielectric properties of the poly(arylene ether).

Patent Document 2 discloses a method for producing low-molecular-weight polyphenylene ether. This resin has an intrinsic viscosity of 0.08 dL/g to 0.16 dL/g. However, this resin is a monofunctional low-molecular-weight resin and has great defects in heat resistance when being applied to the field of copper plates.

Patent Document 3 discloses a method for producing low-molecular-weight polyphenylene ether. This resin has a molecular weight of 4000 or below. However, this resin is produced by redistribution of high-molecular-weight polyphenylene ether. As a result, a certain amount of large molecules cannot be completely converted into small molecules, and there are a lot of initiator residues in the molecules, which may affect the properties of the copper-clad plate.

### Prior art documents

Patent Document 1 CN1004025 82C Announcement text
Patent Document 2 CN1334836AAnnouncement text
Patent Document 3 CN101389691AAnnouncement text

### Summary of the Invention

In order to solve the above problems, fully exert the excellent dielectric properties of poly(arylene ether) and improve the heat resistance of a copper-clad plate applied with poly(arylene ether), the present application provides a novel polyfunctional poly(arylene ether) resin and a preparation method thereof. The polyfunctional poly(arylene ether) has a low molecular weight, and at the same time, the polyfunctional poly(arylene ether) has a functional group on each of two ends, and thus can better cross-link with epoxy resin, which can improve the heat resistance. The polyfunctional poly(arylene ether) is directly synthesized from monophenol and bisphenol monomers, which avoids the existence of monofunctional high-molecular-weight polyphenylene ether and solves the problem of solubility of polyphenylene ether in butanone, so that the excellent dielectric properties of the poly(arylene ether) can be fully exerted.

The specific technical solutions of the present application are as follows:
1. A polyfunctional poly(arylene ether) resin, having a number average molecular weight of 1000-6000, preferably a number average molecular weight of 1500-3000, and a structural formula shown in Formula (1) below: 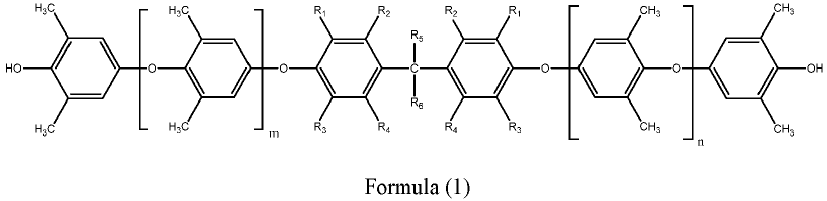 where in Formula (1), R1, R2, R3 and R4 are selected from hydrogen, halogen, aryl or C₁-C₁₂ alkyl; R5 and R6 are selected from hydrogen, methyl or ethyl; and m and n are selected from integers of 1 to 50.
2. The polyfunctional poly(arylene ether) resin according to item 1, where the halogen is selected from chlorine and bromine;
   preferably, the aryl is selected from methyl, ethyl and allyl; and
   preferably, the C₁-C₁₂ alkyl is C₁-C₁₂ straight-chain alkyl or branched-chain alkyl.
3. The polyfunctional poly(arylene ether) resin according to item 1 or 2, where R1 and R3 are selected from C₁-C₆ alkyl, and R2 and R4 are hydrogen;
   preferably, R1 and R3 are selected from C₁-C₄ alkyl; and
   preferably, R1 and R3 are methyl.
4. The polyfunctional poly(arylene ether) resin according to any of items 1 to 3, where R5 and R6 are selected from methyl or ethyl;
   preferably, R5 and R6 are methyl; and
   preferably, R5 and R6 are methyl and ethyl respectively.
5. The polyfunctional poly(arylene ether) resin according to any of items 1 to 4, having an intrinsic viscosity of 0.04-0.20 dL/g, and preferably 0.06-0.14 dL/g.
6. A preparation method of a polyfunctional poly(arylene ether) resin, including the following steps:
   adding a monophenol compound and a polyphenol compound to a good solvent of poly(arylene ether) to obtain a monomer solution, mixing the monomer solution with a catalyst while introducing oxygen to carry out polymerization, and after the polymerization is finished, adding a terminator to obtain a reaction liquid I; and
   carrying out liquid-liquid separation on the reaction liquid I, taking an upper organic phase as a reaction liquid II, and pouring the reaction liquid II into a poor solvent to precipitate the polyfunctional poly(arylene ether) resin as shown in Formula (1), 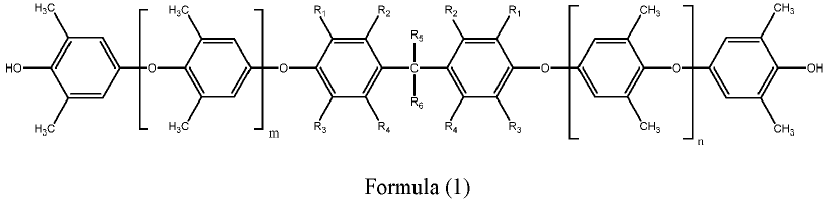
   where in Formula (1), R1, R2, R3 and R4 are selected from hydrogen, halogen, aryl or C₁-C₁₂ alkyl; R5 and R6 are selected from hydrogen, methyl or ethyl; and m and n are selected from integers of 1 to 50.
7. The preparation method according to item 6, where the halogen is selected from chlorine and bromine;
   preferably, the aryl is selected from methyl, ethyl and allyl; and
   preferably, the C₁-C₁₂ alkyl is C₁-C₁₂ straight-chain alkyl or branched-chain alkyl.
8. The preparation method according to item 7 or 8, where R1 and R3 are selected from C₁-C₆ alkyl, and R2 and R4 are hydrogen;
   preferably, R1 and R3 are selected from C₁-C₄ alkyl; and
   preferably, R1 and R3 are methyl.
9. The preparation method according to any of items 6 to 8, where R5 and R6 are selected from methyl or ethyl;
   preferably, R5 and R6 are methyl; and
   preferably, R5 and R6 are methyl and ethyl respectively.
10. The preparation method according to any of items 6 to 9, where the polyfunctional poly(arylene ether) resin has an intrinsic viscosity of 0.04-0.20 dL/g, preferably 0.06-0.14 dL/g; and
   preferably, the polyfunctional poly(arylene ether) resin has a number average molecular weight of 1000-6000, and preferably 1500-3000.
11. The preparation method according to any of items 6 to 11, where the polymerization is carried out at a reaction temperature of 20-90°C, preferably 20-75°C, more preferably 30-60°C, and most preferably 40-45°C.
12. The preparation method according to any of items 6 to 12, where the polymerization is carried out for 1-10 h, preferably 1-7 h, more preferably 2-5 h, and most preferably 3.5-4.5 h.
13. The preparation method according to any of items 6 to 13, where a volume ratio of the reaction liquid II to the poor solvent is 1:1-10, and preferably 1:3-6.
14. The preparation method according to any of items 6 to 14, where after the monophenol compound and the polyphenol compound are added to the good solvent of poly(arylene ether), the temperature is raised to 40-80°C, preferably raised to 50-70°C, and the mixture is stirred until the monophenol compound and the polyphenol compound are dissolved to obtain the monomer solution.
15. The preparation method according to any of items 6 to 15, where the good solvent of poly(arylene ether) is selected from any one or two or more of toluene, chlorobenzene, chloroform and xylene; and
   preferably, the poor solvent is selected from any one or two or more of methanol, ethanol, propanol, isobutanol, butanone and acetone.
16. The preparation method according to any of items 6 to 16, where the monophenol compound is selected from any one or two or more of 2,6-dimethylphenol, 2,3-xylenol, 2,5-xylenol, 3,5-dimethylphenol, o-cresol, m-cresol, 2,3,6-trimethylphenol, 2,3,5-trimethylphenol and phenol; and
   preferably, the monophenol compound is 2,6-dimethylphenol.
17. The preparation method according to any of items 6 to 17, where the polyphenol compound is selected from any one or two or more of bisphenol A, tetramethyl bisphenol M, tetramethyl biphenol, dihydroxy diphenyl ether, tetramethyl bisphenol A, novolac and cresol novolac; and
   preferably, the polyphenol compound is tetramethyl bisphenol A and tetramethyl bisphenol M.
18. The preparation method according to any of items 6 to 18, where a mass ratio of the monophenol compound to the polyphenol compound is 2-25:1, preferably 2-10:1, and more preferably 1-5:1.
19. The preparation method according to any of items 6 to 19, where the polyphenol compound is tetramethyl bisphenol A and tetramethyl bisphenol M, and a mass ratio of the tetramethyl bisphenol A to the tetramethyl bisphenol M is 0.1-10:1, preferably 0.5-8:1, further preferably 0.5-5:1, and more further preferably 0.5 to 3:1.
20. The preparation method according to any of items 6 to 20, where the catalyst is a complex of a metal salt and an amine, the metal salt is selected from any one or two or more of cuprous chloride, cupric chloride, cuprous bromide, cupric bromide, manganese chloride and manganese bromide, and the amine is selected from any one or two or more of primary monoamine, secondary monoamine, tertiary monoamine and diamine;
   preferably, the primary monoamine is selected from any one or two or more of n-propylamine, isopropylamine, n-butylamine, sec-butylamine, tert-butylamine, n-pentylamine, n-hexylamine and cyclohexylamine, preferably n-butylamine;
   preferably, the secondary monoamine is selected from any one or two or more of dimethylamine, diethylamide, di-n-butylamine, di-tert-butylamine, di-n-propylamine and morpholine, preferably di-n-butylamine and/or morpholine;
   preferably, the tertiary monoamine is selected from any one or two or more of trimethylamine, triethylanmine, tripropylamine, tributylamine, dimethylethylamine, dimethylpropylamine and N,N-dimethyl-n-butylamine, preferably N,N-dimethyl-n-butylamine; and
   preferably, the diamine is selected from any one or two or more of ethylenediamine, propylenediamine, hexanediamine, butanediamine and p-phenylenediamine.
21. The preparation method according to any of items 6 to 21, where a mole ratio of the amine to metal ions in the metal salt is 20-100:1, and preferably 25-70:1.
22. The preparation method according to any of items 6 to 22, where the terminator is selected from any one or two or more of potassium sodium tartrate, nitrilotriacetic acid, citric acid, aminoacetic acid, ethylenediamine tetraacetic acid, ethylenediamine tetramethylenephosphonic acid, hydroxyethylidene diphosphonic acid, hydroxyethyl ethylenediamine triacetic acid, diethylenetriaminepentaacetic acid, nitrilotriacetic acid and nitrilotriacetate, preferably ethylenediamine tetraacetic acid and nitrilotriacetic acid.
23. The preparation method according to any of items 6 to 23, where a mole ratio of the terminator to the metal ions in the metal salt is greater than 2:1.
24. The preparation method according to any of items 6 to 24, where the liquid-liquid separation is carried out by phase separation by standing or using a liquid-liquid separator.

### Beneficial effects

The polyfunctional poly(arylene ether) resin provided by the present application has a functional group on each of two ends, and thus can better cross-link with epoxy resin, which can improve the heat resistance. The polyfunctional poly(arylene ether) is directly synthesized from monophenol and bisphenol monomers, which avoids the existence of monofunctional high-molecular-weight polyphenylene ether and solves the problem of solubility of polyphenylene ether in butanone, so that the excellent dielectric properties of the poly(arylene ether) can be fully exerted.

According to the preparation method of the present application for preparing the polyfunctional poly(arylene ether) resin, the monophenol compound and the polyphenol compound are used as the monomers of poly(arylene ether) simultaneously; a mass ratio of the monophenol compound to the polyphenol compound is especially controlled; the polyphenol compound is further controlled to be tetramethyl bisphenol A and tetramethyl bisphenol M; and the mass ratio of the tetramethyl bisphenol A to the tetramethyl bisphenol M is also controlled, so that the bisphenol monomer has good solubility in the good solvent and can completely participate in the reaction system. Therefore, the resin has narrower molecular weight distribution and better properties.

According to the preparation method of the present application for preparing the polyfunctional poly(arylene ether) resin, by controlling the reaction temperature, the reaction time as well as the type and content of the good solvent, the poor solvent, the terminator and the catalyst added and controlling the mole ratio or mass ratio of the reagents within the range of the present application, the obtained polyfunctional poly(arylene ether) resin has a functional group at each of the two ends, and thus can better cross-link with epoxy resin, which can improve the heat resistance. The polyfunctional poly(arylene ether) is directly synthesized from monophenol and bisphenol monomers, which avoids the existence of monofunctional high-molecular-weight polyphenylene ether and solves the problem of solubility of polyphenylene ether in butanone. In addition, the problem of precipitation of the bisphenol monomer in the good solvent during the reaction process is also solved.

### Detailed Description of the Invention

The present application will be described in detail below.

It should be noted that "including" or "comprising" mentioned throughout the specification and claims is an open term, and thus should be interpreted as "including but not limited to". The subsequent description of the specification is preferred embodiments for implementing the present application. However, the description is for the purpose of illustrating the general principles of the specification and is not intended to limit the scope of the present application. The protection scope of the present application shall be as defined by the appended claims.

The present application provides a polyfunctional poly(arylene ether) resin, which has a number average molecular weight of 1000-6000, preferably a number average molecular weight of 1500-3000, and a structural formula shown in Formula (1) below:

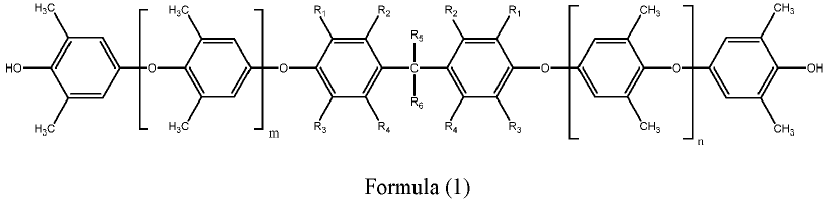

The polyfunctional poly(arylene ether) resin in the present application refers to a poly(arylene ether) resin containing two hydroxyl functional groups.

In Formula (1), R1, R2, R3 and R4 are selected from hydrogen, halogen, aryl or C₁-C₁₂ alkyl; R5 and R6 are selected from hydrogen, methyl or ethyl; and m and n are selected from integers of 1 to 50.

In Formula (1), R1-R6 are hydrogen or a substituent. In a specific embodiment, R1 is each independently selected from hydrogen, halogen, aryl or C₁-C₁₂ alkyl, R2 is each independently selected from hydrogen, halogen, aryl or C₁-C₁₂ alkyl, R3 is each independently selected from hydrogen, halogen, aryl or C₁-C₁₂ alkyl, and R4 is each independently selected from hydrogen, halogen, aryl or C₁-C₁₂ alkyl; and R5 and R6 are each independently selected from hydrogen or methyl or ethyl.

In a specific embodiment, the halogen may be chlorine or bromine; the aryl may be methyl, ethyl or allyl; the C₁-C₁₂ alkyl is C₁-C₁₂ straight-chain alkyl or branched-chain alkyl; and R5 and R6 are selected from methyl or ethyl.

In a specific embodiment, R1 and R3 are selected from C₁-C₆ alkyl, and R2 and R4 are hydrogen.

In a specific embodiment, R1 and R3 are selected from C₁-C₄ alkyl, and R2 and R4 are hydrogen.

In a specific embodiment, R1 and R3 are methyl, R2 and R4 are hydrogen, and R5 and R6 are both methyl.

In a specific embodiment, R1 and R3 are methyl, R2 and R4 are hydrogen, and R5 and R6 are methyl and ethyl respectively.

In Formula (1), m and n are repeating units. In a specific embodiment, m is an integer of 1 to 50, for example, 1, 2, 3, 4, 5, 6, 7, 8, 9, 10, 11, 12, 13, 14, 15, 16, 18, 20, 22, 25, 27, 30, 32, 35, 37, 40, 42, 45, 47, 50, etc.; and n is an integer of 1 to 50, for example, 1, 2, 3, 4, 5, 6, 7, 8, 9, 10, 11, 12, 13, 14, 15, 16, 18, 20, 22, 25, 27, 30, 32, 35, 37, 40, 42, 45, 47, 50, etc.

In a specific embodiment, the polyfunctional poly(arylene ether) resin has a number average molecular weight Mn of 1000-6000, for example, 1000, 1200, 1400, 1600, 1800, 2000, 2200, 2400, 2600, 2800, 3000, 3200, 3400, 3600, 3800, 4000, 4200, 4400, 4600, 4800, 5000, 5200, 5400, 5600, 5800, 6000, etc., and preferably 1500-3000.

In the present application, the molecular weight distribution of the polyfunctional poly(arylene ether) resin is measured by gel permeation chromatography (GPC). The chromatography system is composed of an Agilent 1100 series system, including an isobaric pump, an autosampler, a thermostatted column compartment and a multi-wavelength detector. An elution solvent is chloroform containing 50 ppm di-n-butylamine. A sample solution is filtered through a Gelman syringe filter (0.45 µm) prior to the GPC analysis. No additional sample preparation is performed. The injection volume is 50 ml, and the flow rate of the eluent is set to 1 mL/min. The detection wavelength is set to 280 nm. Data is acquired and processed using Agilent ChemStation with integrated GPC data analysis software. The molecular weight distribution results are calibrated with a polystyrene standard. Without any correction, the results are reported as Mn/Mw, i.e., number average molecular weight/weight average molecular weight.

In a specific embodiment, the polyfunctional poly(arylene ether) resin has an intrinsic viscosity of 0.04-0.20 dL/g, for example, 0.04 dL/g, 0.05 dL/g, 0.06 dL/g, 0.07 dL/g, 0.08 dL/g, 0.09 dL/g, 0.1 dL/g, 0.11 dL/g, 0.12 dL/g, 0.13 dL/g, 0.14 dL/g, 0.15 dL/g, 0.16 dL/g, 0.17 dL/g, 0.18 dL/g, 0.19 dL/g, 0.20 dL/g, etc., and preferably 0.06-0.14 dL/g.

In the present application, in chloroform at 25°C, the intrinsic viscosity of the polyfunctional poly(arylene ether) resin that has been dried in vacuum at 125°C for 1 hour is measured. The concentration of the polyfunctional poly(arylene ether) resin in chloroform is 0.008 g/ mL. The polyfunctional poly(arylene ether) resin having the intrinsic viscosity within the scope of the present application can be better miscible with epoxy resins and hydrocarbon resins, and is suitable for the production process of printed circuit boards.

The present application further provides a preparation method of a polyfunctional poly(arylene ether) resin, which includes the following steps:
adding a monophenol compound and a polyphenol compound to a good solvent of poly(arylene ether) to obtain a monomer solution, mixing the monomer solution with a catalyst while introducing oxygen to carry out polymerization, and after the polymerization is finished, adding a terminator to obtain a reaction liquid I; and
carrying out liquid-liquid separation on the reaction liquid I, taking an upper organic phase as a reaction liquid II, and pouring the reaction liquid II into a poor solvent to precipitate the polyfunctional poly(arylene ether) resin as shown in Formula (1),

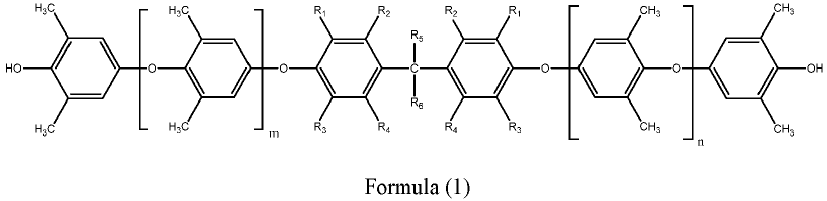

In Formula (1), R1, R2, R3 and R4 are selected from hydrogen, halogen, aryl or C₁-C₁₂ alkyl; R5 and R6 are selected from hydrogen, methyl or ethyl; and m and n are selected from integers of 1 to 50.

In a specific embodiment, the polymerization is carried out at a reaction temperature of 20°C-90°C, for example, 20°C, 25°C, 30°C, 35°C, 40°C, 45°C, 50°C, 55°C, 60°C, 65°C, 70°C, 75°C, 80°C, 85°C, 90°C, etc., preferably 20-75°C, more preferably 30-60°C, and most preferably 40-45°C. The polymerization is carried out for 1-10 h, for example, 1 h, 2 h, 3 h, 4 h, 5 h, 6 h, 7 h, 8 h, 9 h, 10 h, etc., preferably 1-7 h, more preferably 2-5 h, and most preferably 3.5-4.5 h.

In a specific embodiment, in step (1), after the monophenol compound and the polyphenol compound are added to the good solvent of poly(arylene ether), the temperature is raised to 40-80°C, for example, 40°C, 45°C, 50°C, 55°C, 60°C, 65°C, 70°C, 75°C, 80°C, etc., preferably raised to 50-70°C, and the mixture is stirred until the monophenol compound and the polyphenol compound are dissolved to obtain the monomer solution.

In a specific embodiment, after the monomer solution is obtained, an additional good solvent of poly(arylene ether) is taken, a catalyst is added and oxygen is introduced to obtain a catalyst-containing toluene solution. The monomer solution is added to the catalyst-containing toluene solution while keeping introducing oxygen. After the addition is finished, at the condition of 20-90°C, preferably 20-75°C, more preferably 30-60°C and most preferably 40-45°C, oxygen is continuously introduced to carry out polymerization. The time of continuing introducing the oxygen is the polymerization time, which is 1-10 h, preferably 1-7 h, more preferably 2-5 h, and most preferably 3.5-4.5 h.

The "good solvent of poly(arylene ether)" in the present application refers to a solvent that has strong dissolving ability for poly(arylene ether) and whose interaction parameter χ with poly(arylene ether) is less than 0.5. In a specific embodiment, the good solvent of poly(arylene ether) may be selected from any one or two or more of toluene, chlorobenzene, chloroform and xylene, but is not limited thereto. Preferably, the good solvent of poly(arylene ether) includes one or two of toluene and xylene. Further preferably, the good solvent of poly(arylene ether) includes toluene.

The "poor solvent" in the present application refers to a solvent that has weak dissolving ability for poly(arylene ether) and whose interaction parameter χ with poly(arylene ether) is close to or greater than 0.5. In a specific embodiment, the poor solvent may be selected from any one or two or more of methanol, ethanol, propanol, isobutanol, butanone and acetone.

In a specific embodiment, a volume ratio of the reaction liquid II to the poor solvent is 1:1-10, for example, 1:1, 1:2, 1:3, 1:4, 1:5, 1:6, 1:7, 1:8, 1:9, 1:10, etc., preferably 1:3-6. The liquid-liquid separation is carried out by phase separation by standing or using a liquid-liquid separator.

In a specific embodiment, the polyphenol compound is a bisphenol compound.

In a specific embodiment, the monophenol compound is selected from any one or two or more of 2,6-dimethylphenol, 2,3-xylenol, 2,5-xylenol, 3,5-dimethylphenol, o-cresol, m-cresol, 2,3,6-trimethylphenol, 2,3,5-trimethylphenol and phenol, preferably 2,6-dimethylphenol. The polyphenol compound is selected from any one or two or more of bisphenol A, tetramethyl bisphenol M, tetramethyl biphenol, dihydroxy diphenyl ether, tetramethyl bisphenol A, novolac and cresol novolac, and preferably tetramethyl bisphenol A and tetramethyl bisphenol M.

The tetramethyl bisphenol A (TMBPA), whose chemical name is 2,2-bis(4-hydroxy-3,5-dimethylphenyl)propane, has a molecular formula of C₁₉H₂₄O₂, a molecular weight of 284.39 and a structural formula of

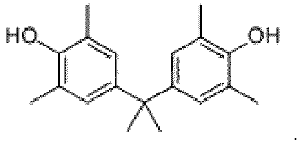

The tetramethyl bisphenol M (TMBPM), whose chemical name is 2,2-bis(4-hydroxy-3,5-dimethylphenyl)butane, has a molecular formula of C₂₀H₂₆O₂, a molecular weight of 298.42 and a structural formula of

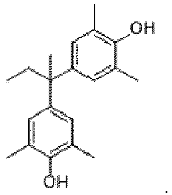

In a specific embodiment, a mass ratio of the monophenol compound to the polyphenol compound is 2-25:1, for example, 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1, 21:1, 22:1, 23:1, 24:1, 25:1, etc., preferably 2-10:1, and more preferably 1-5:1. When the mass ratio of the monophenol compound to the polyphenol compound is within this range, a low-molecular-weight polymer can be obtained, and a compound having more hydroxyl functional groups can be obtained.

In a specific embodiment, the polyphenol compound is tetramethyl bisphenol A and tetramethyl bisphenol M, and a mass ratio of the tetramethyl bisphenol A to the tetramethyl bisphenol M is 0.1-10:1, for example, 0.1:1, 0.5:1, 1:1, 2:1, 3:1, 4:1, 5:1, 6:1, 7:1, 8:1, 9:1, 10:1, etc., preferably 0.5-8:1, further preferably 0.5-5:1 and more further preferably 0.5-3:1. When the mass ratio of the tetramethyl bisphenol A to the tetramethyl bisphenol M is within the above range, the bisphenol compound may have favorable solubility, and therefore, the resin has narrower molecular weight distribution and better properties.

In a specific embodiment, the catalyst is a complex of a metal salt and an amine, the metal salt is selected from any one or two or more of cuprous chloride, cupric chloride, cuprous bromide, cupric bromide, manganese chloride and manganese bromide, and the amine is selected from any one or two or more of primary monoamine, secondary monoamine, tertiary monoamine and diamine. A mole ratio of the amine to metal ions in the metal salt is 20-100:1, for example, 20:1, 25:1, 30:1, 35:1, 40:1, 45:1, 50:1, 55:1, 60:1, 65:1, 70:1, 75:1, 80:1, 85:1, 90:1, 95:1, 100:1, etc., and preferably 25-70:1. Preferably, the primary monoamine is selected from any one or two or more of n-propylamine, isopropylamine, n-butylamine, sec-butylamine, tert-butylamine, n-pentylamine, n-hexylamine and cyclohexylamine, and preferably n-butylamine. Preferably, the secondary monoamine is selected from any one or two or more of dimethylamine, diethylamide, di-n-butylamine, di-tert-butylamine, di-n-propylamine and morpholine, and preferably di-n-butylamine and/or morpholine. Preferably, the tertiary monoamine is selected from any one or two or more of trimethylamine, triethylanmine, tripropylamine, tributylamine, dimethylethylamine, dimethylpropylamine and N,N-dimethyl-n-butylamine, and preferably N,N-dimethyl-n-butylamine. Preferably, the diamine is selected from any one or two or more of ethylenediamine, propylenediamine, hexanediamine, butanediamine and p-phenylenediamine.

In a specific embodiment, the terminator is selected from any one or two or more of potassium sodium tartrate, nitrilotriacetic acid, citric acid, aminoacetic acid, ethylenediamine tetraacetic acid, ethylenediamine tetramethylenephosphonic acid, hydroxyethylidene diphosphonic acid, hydroxyethyl ethylenediamine triacetic acid, diethylenetriaminepentaacetic acid, nitrilotriacetic acid and nitrilotriacetate, and preferably ethylenediamine tetraacetic acid (EDTA) and nitrilotriacetic acid. A mole ratio of the terminator to the metal ions in the metal salt is greater than 2:1, for example, 2.1:1, 2.3:1, 2.5:1, 2.8:1, 3:1, 3.2:1, 3.4:1, 3.5:1, 4:1, 5:1, 6:1, 7:1, etc.

In the preparation process of the polyfunctional poly(arylene ether) resin according to the present application, the reaction temperature, the reaction time as well as the type and content of the good solvent, the poor solvent, the terminator and the catalyst are controlled, the mole ratio or mass ratio of the reagents are controlled within the range of the present application, especially the mass ratio of the monophenol compound to the polyphenol compound is controlled, the polyphenol compound is further controlled to be tetramethyl bisphenol A and tetramethyl bisphenol M, and the mass ratio of the tetramethyl bisphenol A to the tetramethyl bisphenol M is also controlled, so that the bisphenol monomer has good solubility in the good solvent and can completely participate in the reaction system. Therefore, the resin has narrower molecular weight distribution and better properties. Specifically, the polyfunctional poly(arylene ether) resin has an intrinsic viscosity of less than 0.35 dL/g, even as low as 0.093 dL/g; a hydroxyl content of greater than 5000 ppm, even up to 19980 ppm or higher; a number average molecular weight of less than 6000, even as low as 1900 or lower; and a weight average molecular weight of less than 11600, even as low as 3701 or lower.

### Examples

In the following specific examples, all materials and reagents are commercially available unless otherwise specified.
N,N-dimethyl-n-butylamine: purity≥98%, Hubei Ju Sheng Technology Co., Ltd.
n-Butylamine: purity≥99.5%, Shandong Shengcang Chemical Technology Co., Ltd.
2,6-Dimethylphenol: purity≥99.5%, Ruicheng Branch of Nantong Xingchen Synthetic Material Co., Ltd.
Tetramethyl bisphenol A: purity≥98%, Sigma-Aldrich.
Tetramethyl bisphenol M: purity≥98%, Shenzhen Atomax Chemicals Co., Ltd.
Cupric chloride: purity≥98%, Shanghai Pinlixiu Environmental Protection Technology Co., Ltd.
EDTA: purity≥99%, Lishui Breit Chemical Co., Ltd.

### Example 1

In a 2000 mL four-neck flask, 130 g of toluene, 95 g of 2,6-dimethylphenol, 4 g of tetramethyl bisphenol A and 1 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 2

In a 2000 mL four-neck flask, 130 g of toluene, 90 g of 2,6-dimethylphenol, 8 g of tetramethyl bisphenol A and 2 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 3

In a 2000 mL four-neck flask, 130 g of toluene, 90 g of 2,6-dimethylphenol, 4 g of tetramethyl bisphenol A and 6 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 4

In a 2000 mL four-neck flask, 130 g of toluene, 80 g of 2,6-dimethylphenol, 16 g of tetramethyl bisphenol A and 4 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 5

In a 2000 mL four-neck flask, 130 g of toluene, 80 g of 2,6-dimethylphenol, 8 g of tetramethyl bisphenol A and 12 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 6

In a 2000 mL four-neck flask, 130 g of toluene, 70 g of 2,6-dimethylphenol, 24 g of tetramethyl bisphenol A and 6 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 7

In a 2000 mL four-neck flask, 130 g of toluene, 70 g of 2,6-dimethylphenol, 12 g of tetramethyl bisphenol A and 18 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 8

In a 2000 mL four-neck flask, 130 g of toluene, 95 g of 2,6-dimethylphenol, 4 g of tetramethyl bisphenol A and 1 g of tetramethyl bisphenol were added, heated to 60°C and stirred until all the tetramethyl bisphenol A and tetramethyl bisphenol were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 9

In a 2000 mL four-neck flask, 130 g of toluene, 95 g of 2,6-dimethylphenol, 4 g of tetramethyl bisphenol A and 1 g of dihydroxy diphenyl ether were added, heated to 60°C and stirred until all the tetramethyl bisphenol A and dihydroxy diphenyl ether were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 10

In a 2000 mL four-neck flask, 130 g of toluene, 90 g of 2,6-dimethylphenol, 8.85 g of tetramethyl bisphenol A and 1.15 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 11

In a 2000 mL four-neck flask, 130 g of toluene, 90 g of 2,6-dimethylphenol, 9.05 g of tetramethyl bisphenol A and 0.95 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Example 12

In a 2000 mL four-neck flask, 130 g of toluene, 100 g of 2,6-dimethylphenol, 3.2 g of tetramethyl bisphenol A and 0.8 g of tetramethyl bisphenol M were added, heated to 60°C and stirred until all the tetramethyl bisphenol A and tetramethyl bisphenol M were dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin.

### Comparative Example 1

In a 2000 mL four-neck flask, 130 g of toluene, 70 g of 2,6-dimethylphenol and 30 g of tetramethyl bisphenol A were added, heated to 60°C and stirred until all the tetramethyl bisphenol A was dissolved. The temperature was reduced to room temperature, and a monomer solution was obtained. In another 2000 mL four-neck reaction vessel, 100 g of toluene was added as a solvent, 0.5 g of N,N-dimethyl-n-butylamine, 2 g of n-butylamine and 0.375 g of 40% cupric chloride aqueous solution were sequentially added, oxygen was introduced at 0.1 L/min for 10 min, and a catalyst-containing toluene solution was obtained. The monomer solution was gradually added to the catalyst-containing toluene solution while keeping introducing oxygen at 0.1 L/min. After the addition is finished, the reaction temperature was kept at 42°C. After the addition is finished, the oxygen was introduced for additional 4 h. Then, the introduction of oxygen was stopped, nitrogen was introduced at 0.1 L/min, and 9 g of 10% (mass fraction) EDTA aqueous solution was added. The mixture was allowed to stand for phase separation for 60 min. The upper organic phase reaction liquid was poured out, added to methanol and precipitated, where a volume ratio of the reaction liquid to the methanol was 1:6. The resulting mixture was filtered, and the solid was dried in a 60°C vacuum oven for 2 h to obtain the polyfunctional poly(arylene ether) resin of Comparative Example 1.

The experimental conditions and the parameters of the synthesized polyfunctional poly(arylene ether) in Examples 1-12 and Comparative Example 1 are listed in Table 1 below.

**Table 1**

| No. | Monophenol compound | Polyphenol compound | Mass ratio of monophenol to polyphenol | Mass ratio of (1) to (2) | Polymerization temperature and time | Terminator | Cataly st | Mole ratio of amine to metal ions in metal salt | Mole ratio of terminator to metal ions in metal salt | Intrinsic viscosity of po lyfunctio nal poly(ary lene ether) resin (dL/g) | Mn/Mw | Hydroxyl content of polyfunctional poly(arylene ether) resin (ppm) | Was there any precipitation after the monomers were dissolved and cooled |
|---|---|---|---|---|---|---|---|---|---|---|---|---|---|
| Example 1 | 2,6-dimethylphenol | (1): Tetramethyl bisphenol A | 19:1 | 4:1 | 45°C,4h | EDTA | N,N -dimethy l-n-butylamine, n-butylamine and 40% cupric chloride aqueous solution | 28.9:1 | 2.8:1 | 0.236 | 5534/10386 | 5432 | No |
| | | (2): Tetramethyl bisphenol M | | | | | | | | | | | |
| Example 2 | 2,6-dimethylphenol | (1): Tetramethyl bisphenol A | 9:1 | 4:1 | 45°C,4h | EDTA | N,N -dimethy l-n-butylamine, n-butylamine and 40% cupric chloride aqueous solution | 28.9:1 | 2.8:1 | 0.182 | 3866/7654 | 9043 | No |
| | | (2): Tetramethyl bisphenol M | | | | | | | | | | | |
| Example 3 | 2,6-dimethylphenol | (1): Tetramethyl bisphenol A | 9:1 | 1:1.5 | 45°C,4h | EDTA | N,N -dimethy l-n-butylamine, n-butylamine and 40% cupric chloride aqueous solution | 28.9:1 | 2.8:1 | 0.185 | 3765/7466 | 9158 | No |
| | | (2): Tetramethyl bisphenol M | | | | | | | | | | | |
| Example 4 | 2,6-dimethylphenol | (1): Tetramethyl bisphenol A | 4:1 | 4:1 | 45°C,4h | EDTA | N,N -dimethy l-n-butylamine, n-butylamine and 40% cupric chloride aqueous solution | 28.9:1 | 2.8:1 | 0.142 | 2901/5530 | 13879 | No |
| | | (2): Tetramethyl bisphenol M | | | | | | | | | | | |
| Example 5 | 2,6-dimethylphenol | (1): Tetramethyl bisphenol A | 4:1 | 1:1.5 | 45°C,4h | EDTA | N,N -dimethy l-n-butylamine, n-butylamine and 40% cupric chloride aqueous solution | 28.9:1 | 2.8:1 | 0.144 | 2885/5432 | 14015 | No |
| | | (2): Tetramethyl bisphenol M | | | | | | | | | | | |
| Example 6 | 2,6-dimethylphenol | (1): Tetramethyl bisphenol A | 2.5:1 | 4:1 | 45°C,4h | EDTA | N,N -dimethy l-n-butylamine, n-butylamine and 40% cupric chloride aqueous solution | 28.9:1 | 2.8:1 | 0.091 | 1526/3636 | 20130 | Yes |
| | | (2): Tetramethyl bisphenol M | | | | | | | | | | | |
| Example 7 | 2,6-dimethylphenol | (1): Tetramethyl bisphenol A | 2.5:1 | 1:1.5 | 45°C,4h | EDTA | N,N -dimethy l-n-butylamine, n-butylamine and 40% cupric chloride aqueous solution | 28.9:1 | 2.8:1 | 0.093 | 1900/3701 | 19980 | No |
| | | (2): Tetramethyl bisphenol M | | | | | | | | | | | |
| Example 8 | 2,6-dimethylphenol | (1): Tetramethyl bisphenol A | 19:1 | 4:1 | 45°C,4h | EDTA | N,N -dimethy l-n-butylamine, n-butylamine and 40% cupric chloride aqueous solution | 28.9:1 | 2.8:1 | 0.238 | 5852/10987 | 5332 | Yes |
| | | (2): Tetramethyl bisphenol | | | | | | | | | | | |
| Example 9 | 2,6-dimethylphenol | (1): Tetramethyl bisphenol A | 19:1 | 4:1 | 45°C,4h | EDTA | N,N -dimethy l-n-butylaniine, n-butylamine and 40% cupric chloride aqueous solution | 28.9:1 | 2.8:1 | 0.235 | 5721/10883 | 5401 | Yes |
| | | (2): Dihydroxy diphenyl ether | | | | | | | | | | | |
| Example 10 | 2,6-dimethylphenol | (1): Tetramethyl bisphenol A | 9:1 | 8.85: 1.15 | 45°C,4h | EDTA | N,N -dimethy l-n-butylamine, n-butylamine and 40% cupric chloride aqueous solution | 28.9:1 | 2.8:1 | 0.185 | 3987/8187 | 8895 | No |
| | | (2): Tetramethyl bisphenol M | | | | | | | | | | | |
| Example 11 | 2,6-dimethylphenol | (1): Tetramethyl bisphenol A | 9:1 | 9.05:0.95 | 45°C,4h | EDTA | N,N -dimethy l-n-butylamine, n-butylamine and 40% cupric chloride aqueous solution | 28.9:1 | 2.8:1 | 0.188 | 4033/8354 | 8568 | No |
| | | (2): Tetramethyl bisphenol M | | | | | | | | | | | |
| Example 12 | 2,6-dimethylphenol | (1): Tetramethyl bisphenol A | 25:1 | 4:1 | 45°C,4h | EDTA | N,N -dimethy l-n-butylamine, n-butylamine and 40% cupric chloride aqueous solution | 28.9:1 | 2.8:1 | 0.342 | 5903/11562 | 9043 | No |
| | | (2): Tetramethyl bisphenol M | | | | | | | | | | | |
| Comparative Example 1 | 2,6-dimethylphenol | Tetramethyl bisphenol A | 19:1 | - | 45°C,4h | EDTA | N,N -dimethy l-n-butylamine, n-butylamine and 40% cupric chloride aqueous solution | 28.9:1 | 2.8:1 | 0.243 | 6032/11386 | 4653 | No |

As can be seen from the data results in Table 1, the TMBPM has relatively high solubility, and its other properties are equivalent to those of the TMBPA.

The structural formulas of the examples and comparative example finally obtained are shown below.

Examples 1-7 and 10-12 have the structure as shown in Formula (I) below:

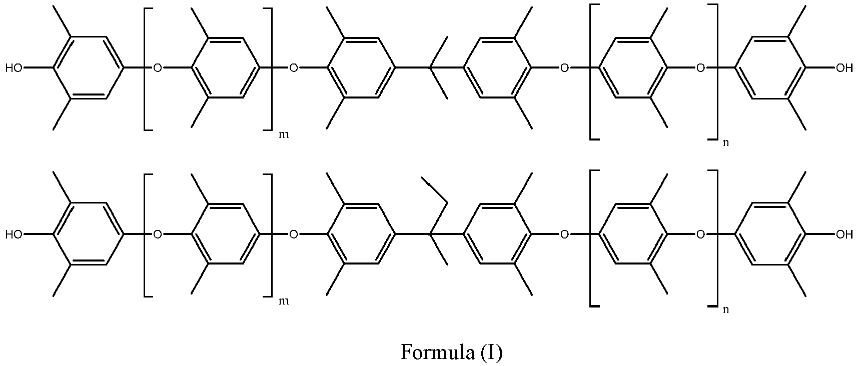

Example 8 has the structure as shown in Formula (II) below:

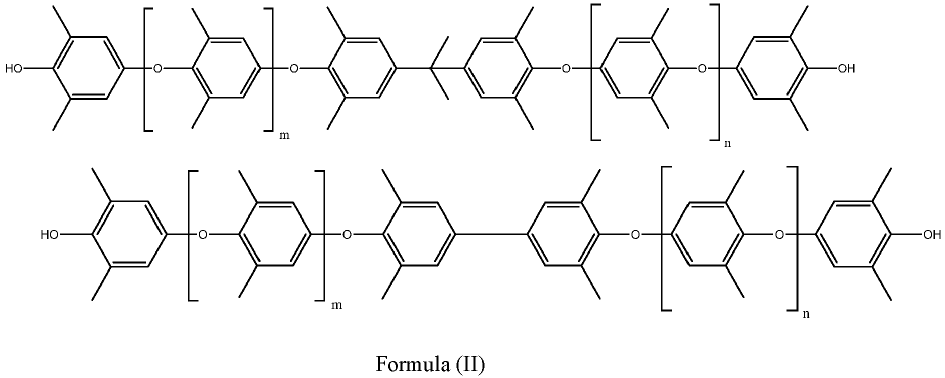

Example 9 has the structure as shown in Formula (III) below:

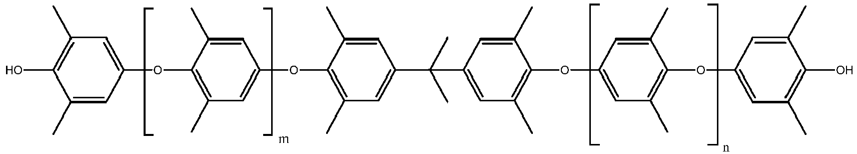

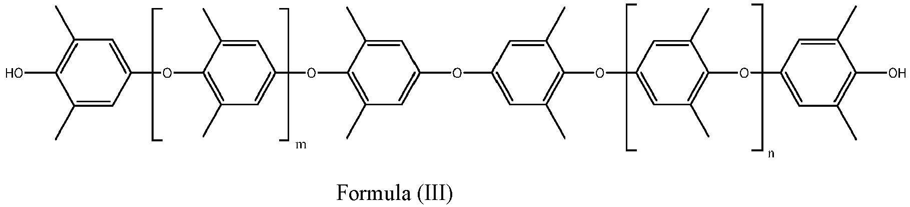

Comparative Example 1 has the structure as shown in Formula (IV) below:

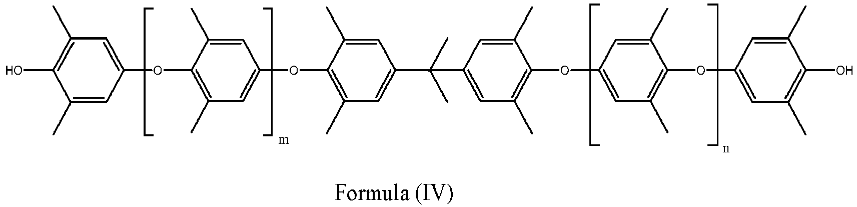

The above are only preferred examples of the present application, and are not intended to limit the present application in other forms. Any person skilled in the art can make changes or modifications to the technical content disclosed above to obtain equivalent examples of equivalent variations. However, any simple changes, equivalent variations and modifications made to the above examples according to the technical essence of the present application without departing from the content of the technical solutions of the present application shall all fall within the protection scope of the technical solutions of the present application.

## Claims

1. A polyfunctional poly(arylene ether) resin, having a number average molecular weight of 1000-6000, preferably a number average molecular weight of 1500-3000, an intrinsic viscosity of 0.04-0.20 dL/g, preferably 0.06-0.14 dL/g, and a structural formula shown in Formula (1) below: 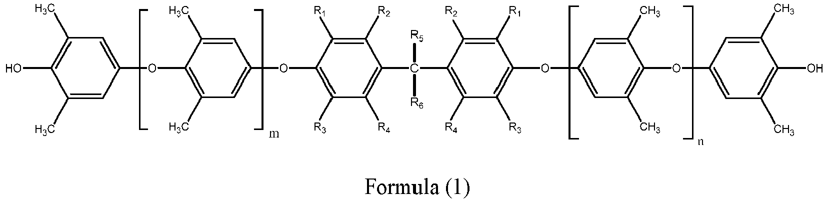
wherein in Formula (1), R1, R2, R3 and R4 are selected from hydrogen, halogen, aryl or C₁-C₁₂ alkyl; R5 and R6 are selected from hydrogen, methyl or ethyl; and m and n are selected from integers of 1 to 50;
the halogen is selected from chlorine and bromine;
preferably, the aryl is selected from methyl, ethyl and allyl;
preferably, the C₁-C₁₂ alkyl is C₁-C₁₂ straight-chain alkyl or branched-chain alkyl;
R1 and R3 are selected from C₁-C₆ alkyl, and R2 and R4 are hydrogen;
preferably, R1 and R3 are selected from C₁-C₄ alkyl;
preferably, R1 and R3 are methyl;
R5 and R6 are selected from methyl or ethyl;
preferably, R5 and R6 are methyl; and
preferably, R5 and R6 are methyl and ethyl respectively.

2. A preparation method of a polyfunctional poly(arylene ether) resin, comprising the following steps:
adding a monophenol compound and a polyphenol compound to a good solvent of poly(arylene ether) to obtain a monomer solution, mixing the monomer solution with a catalyst while introducing oxygen to carry out polymerization, and after the polymerization is finished, adding a terminator to obtain a reaction liquid I; and
carrying out liquid-liquid separation on the reaction liquid I, taking an upper organic phase as a reaction liquid II, and pouring the reaction liquid II into a poor solvent to precipitate the polyfunctional poly(arylene ether) resin as shown in Formula (1), wherein the polyfunctional poly(arylene ether) resin has an intrinsic viscosity of 0.04-0.20 dL/g, preferably 0.06-0.14 dL/g, the polyfunctional poly(arylene ether) resin has a number average molecular weight of 1000-6000, preferably 1500-3000, 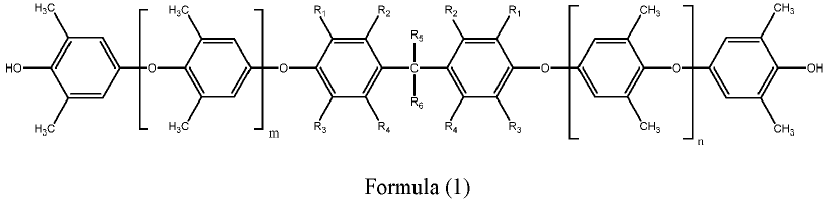
wherein in Formula (1), R1, R2, R3 and R4 are selected from hydrogen, halogen, aryl or C₁-C₁₂ alkyl; R5 and R6 are selected from hydrogen, methyl or ethyl; and m and n are selected from integers of 1 to 50,
preferably, the halogen is selected from chlorine and bromine;
preferably, the aryl is selected from methyl, ethyl and allyl;
preferably, the C₁-C₁₂ alkyl is C₁-C₁₂ straight-chain alkyl or branched-chain alkyl;
R1 and R3 are selected from C₁-C₆ alkyl, and R2 and R4 are hydrogen;
preferably, R1 and R3 are selected from C₁-C₄ alkyl;
preferably, R1 and R3 are methyl;
R5 and R6 are selected from methyl or ethyl;
preferably, R5 and R6 are methyl; and
preferably, R5 and R6 are methyl and ethyl respectively.

3. The preparation method according to claim 2, wherein the polymerization is carried out at a reaction temperature of 20-90°C, and the polymerization is carried out for 1-10 h,
preferably, the polymerization is carried out at a reaction temperature of 20-75°C, and the reaction time is 1-7 h;
more preferably, the polymerization is carried out at a reaction temperature of 30-60°C, and the reaction time is 2-5 h;
most preferably, the polymerization is carried out at a reaction temperature of 40-45 °C, and the reaction time is 3.5-4.5 h; and
further preferably, a volume ratio of the reaction liquid II to the poor solvent is 1:1-10, and preferably 1:3-6.

4. The preparation method according to any of claims 2 to 3, wherein after the monophenol compound and the polyphenol compound are added to the good solvent of poly(arylene ether), the temperature is raised to 40-80°C, and the mixture is stirred until the monophenol compound and the polyphenol compound are dissolved to obtain the monomer solution; and preferably the temperature is raised to 50-70°C.

5. The preparation method according to any of claims 2 to 4, wherein the good solvent of poly(arylene ether) is selected from any one or two or more of toluene, chlorobenzene, chloroform and xylene;
preferably, the poor solvent is selected from any one or two or more of methanol, ethanol, propanol, isobutanol, butanone and acetone;
preferably, the monophenol compound is selected from any one or two or more of 2,6-dimethylphenol, 2,3-xylenol, 2,5-xylenol, 3,5-dimethylphenol, o-cresol, m-cresol, 2,3,6-trimethylphenol, 2,3,5-trimethylphenol and phenol;
preferably, the monophenol compound is 2,6-dimethylphenol;
the polyphenol compound is selected from any one or two or more of bisphenol A, tetramethyl bisphenol M, tetramethyl biphenol, dihydroxy diphenyl ether, tetramethyl bisphenol A, novolac and cresol novolac; and
preferably, the polyphenol compound is tetramethyl bisphenol A and tetramethyl bisphenol M.

6. The preparation method according to any of claims 2 to 5, wherein a mass ratio of the monophenol compound to the polyphenol compound is 2-25:1, preferably 2-10:1, and more preferably 1-5:1; and
the polyphenol compound is tetramethyl bisphenol A and tetramethyl bisphenol M, and a mass ratio of the tetramethyl bisphenol A to the tetramethyl bisphenol M is 0.1-10:1, preferably 0.5-8:1, further preferably 0.5-5:1, and more further preferably 0.5 to 3:1.

7. The preparation method according to any of claims 2 to 6, wherein the catalyst is a complex of a metal salt and an amine, the metal salt is selected from any one or two or more of cuprous chloride, cupric chloride, cuprous bromide, cupric bromide, manganese chloride and manganese bromide, and the amine is selected from any one or two or more of primary monoamine, secondary monoamine, tertiary monoamine and diamine, and a mole ratio of the amine to metal ions in the metal salt is 20-100:1, and preferably 25-70:1;
preferably, the primary monoamine is selected from any one or two or more of n-propylamine, isopropylamine, n-butylamine, sec-butylamine, tert-butylamine, n-pentylamine, n-hexylamine and cyclohexylamine, preferably n-butylamine;
preferably, the secondary monoamine is selected from any one or two or more of dimethylamine, diethylamide, di-n-butylamine, di-tert-butylamine, di-n-propylamine and morpholine, preferably di-n-butylamine and/or morpholine;
preferably, the tertiary monoamine is selected from any one or two or more of trimethylamine, triethylanmine, tripropylamine, tributylamine, dimethylethylamine, dimethylpropylamine and N,N-dimethyl-n-butylamine, preferably N,N-dimethyl-n-butylamine; and
preferably, the diamine is selected from any one or two or more of ethylenediamine, propylenediamine, hexanediamine, butanediamine and p-phenylenediamine.

8. The preparation method according to any of claims 2 to 7, wherein the terminator is selected from any one or two or more of potassium sodium tartrate, nitrilotriacetic acid, citric acid, aminoacetic acid, ethylenediamine tetraacetic acid, ethylenediamine tetramethylenephosphonic acid, hydroxyethylidene diphosphonic acid, hydroxyethyl ethylenediamine triacetic acid, diethylenetriaminepentaacetic acid, nitrilotriacetic acid and nitrilotriacetate, and preferably ethylenediamine tetraacetic acid and nitrilotriacetic acid.

9. The preparation method according to any of claims 2 to 8, wherein a mole ratio of the terminator to the metal ions in the metal salt is greater than 2:1.

10. The preparation method according to any of claim 2 to 9, wherein the liquid-liquid separation is carried out by phase separation by standing or using a liquid-liquid separator.
